# EUROPEAN PATENT SPECIFICATION

(11) **EP 1 993 104 B1**
(45) Date of publication and mention of the grant of the patent: **03.07.2013**
(21) Application number: 06732017.6
(22) Date of filing: 18.04.2006
(51) Int. Cl.: G21F 9/28, G21F 9/30, G21D 1/00, E04G 23/08, G21F 9/34

(54) **METHOD FOR DISMANTLING HEAT EXCHANGER INSTALLED IN BUILDING FOR NUCLEAR REACTOR**
VERFAHREN ZUM AUSEINANDERBAUEN EINES IN EINEM GEBÄUDE FÜR EINEN KERNREAKTOR INSTALLIERTEN WÄRMETAUSCHERS
PROCÉDÉ DE DÉMONTAGE D'ÉCHANGEUR THERMIQUE INSTALLÉ DANS UN BÂTIMENT POUR RÉACTEUR NUCLÉAIRE

(30) Priority: 19.01.2006 JP 2006010613
(43) Date of publication of application: 19.11.2008
(73) Proprietor: The Japan Atomic Power Company, Tokyo 1010053 (JP); Kawasaki Jukogyo Kabushiki Kaisha, Kobe-shi, Hyogo 650-8670 (JP)
(72) Inventor: KIMURA, Hideaki, Tokyo 101-0053 (JP); TOKIEDA, Kiyoshi, Tokyo 136-8588 (JP); TAKENAKA, Satsuki, Tokyo 136-8588 (JP); YAMAZAKI, Seiichiro, Tokyo 136-8588 (JP); BLIGHT, John, F-13382 Marseille Cedex 13 (FR)
(74) Representative: Jones, Ithel Rhys
(86) International application number: PCT/JP2006/308088
(87) International publication number: WO 2007/083401

(56) References cited:
- EP-A1- 0 248 286
- EP-A1- 0 466 533
- DE-A1- 4 428 501
- DE-A1- 19 614 614
- JP-A- 10 046 838
- JP-A- 10 046 838
- JP-A- 2003 075 589
- US-A- 4 299 658

## Description

### TECHNICAL FIELD

The present invention relates to a method for dismantling a heat exchanger installed in a nuclear reactor building and, in particular, to a method for dismantling a heat exchanger installed in a nuclear reactor building, in which a contamination controlled area provided during dismantling can be minimized.

### BACKGROUND ART

In recent years, nuclear power stations are planned to be decommissioned from an economic point of view.

The tasks involved in the dismantling work are performed on the main body of the nuclear reactor and surrounding facilities having a high radio activity level. Therefore, a dismantling technique and method must be used in which potential risk factors such as risk on radiation dose during the tasks and risk in tasks at high elevations are properly taken into account.

In the planned dismantling procedure, first, before the reactor pressure vessel and the like are dismantled, the associated facilities, such as the refueling machine and the heat exchanger, with relatively low radio activity levels are dismantled and removed to provide a working space. Next, the central units such as the reactor pressure vessel are dismantled.

When a specific dismantling plan is developed, the plan must be developed in consideration of the advance of technology and the following important points regarding safety.

(1) At the time of dismantling, an existing structure is used as a radiation shielding structure and a barrier for preventing leakage of radioactive materials to the outside.

(2) When highly radiated portions in the facilities and structures are cut, a method is used in which prevention of occurrence of and removal of secondary products such as dust are taken into consideration.

(3) When work is performed at high radioactivity level areas or facilities and structures in high radiated areas are dismantled, shielding and a remote control apparatus are used.

(4) If necessary, a temporary fence for preventing spread of contamination and a dust collector, for example, are provided.

(5) The cut products produced in the dismantling work are properly handled, conveyed, and stored to prevent spread of contamination and exposure of the workers.

As described above, in the dismantling procedure, first, the associated facilities, such as the refueling machine and the heat exchanger, with relatively low radio activity levels are dismantled and removed.

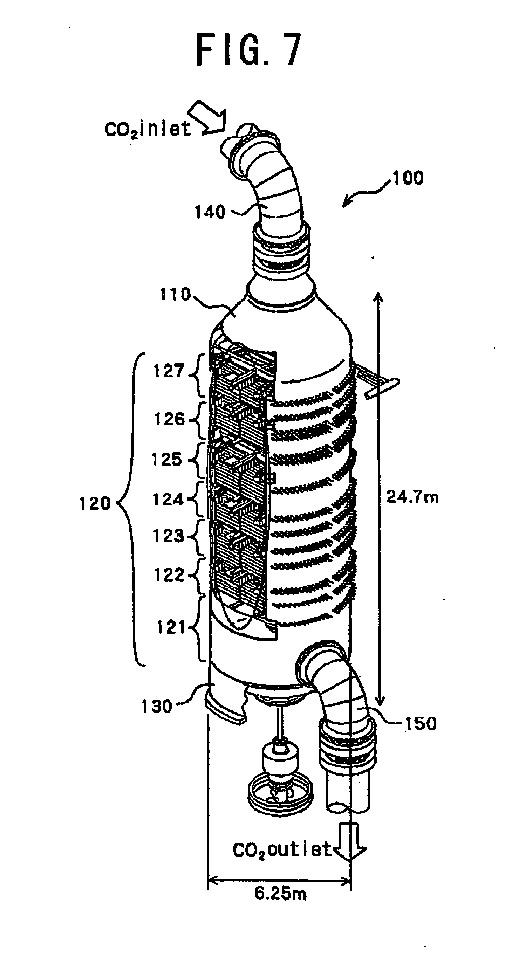

Fig. 7 is a diagram illustrating an example of the structure of a heat exchanger (hereinafter also referred to as an SRU) using in a nuclear power facility.

Two SRUs 100 are installed on each of the south and north sides of a nuclear reactor building, and therefore four SRUs in total are provided. Each of the SRUs 100 is composed of a hot-gas duct 140, a main body 120, a cold-gas duct 150, a gas circulator, and the like. Each SRU 100 has a height of approximately 25 m, a diameter of approximately 6 m, and a weight of approximately 750 t (excluding the gas ducts and the gas circulator). The SRUs 100 have a larger size than the size of most of the units installed in the nuclear power station. The SRU main unit 120 has a structure divided from top to bottom into a top head 110, tiers 7 to 1 (127 to 121), and a bottom head 130. The tier 2 (122) to the tier 7 (127) contain heat exchanger tubes.

Since the SRUs are large-size units as described above, a dismantling and removing method is required which can be performed without spreading the contamination controlled area when the SRUs are dismantled and removed.

As a method for dismantling such a large-size unit, a jack-down method is well known. For example, Patent Document 1 discloses a method in which a boiler in a thermal power plant is dismantled using a jack-down technique.
[Patent Document 1] Japanese Patent Application Laid-Open No. Hei 10-46838.
Document DE 44 28 501 A1 discloses a method for dismantling nuclear reactor vessels, which comprises contamination control during operation.

### DISCLOSURE OF THE INVENTION

### PROBLEMS TO BE SOLVED BY THE INVENTION

As described above, when a nuclear power facility is decommissioned, the contamination controlled area provided therein must be minimized. However, Patent Document 1 does not disclose a specific method for cutting the lower portion of the boiler and does not take into account prevention of leakage of radioactive materials to the outside and prevention of occurrence of and removal of secondary products such as dust.

The present invention has been made in order to solve the above problems in the conventional technology. It is an object of the invention to provide a method for dismantling a heat exchanger installed in a nuclear reactor building, in which a contamination controlled area provided during dismantling can be minimized.

### MEANS FOR SOLVING THE PROBLEMS

The present invention provides a method for dismantling a heat exchanger installed in a nuclear reactor building, the method including: an introducing step of introducing a part of the heat exchanger in a contamination controlled area, the introducing step including providing the contamination controlled area in a part of the nuclear reactor building, suspending the heat exchanger in the nuclear reactor building by a jack down unit provided in the nuclear reactor building, and lowering the heat exchanger; a first cutting step of cutting the part of the suspended heat exchanger by a first cutting unit provided in a first cutting area in the contamination controlled area to thereby separate a sectioned cut-piece from the suspended heat exchanger; a conveying step of conveying the sectioned cut-piece from the first cutting area to a second cutting area in the contamination controlled area by a conveying unit; a second cutting step of cutting the conveyed sectioned cut-piece into small pieces by a second cutting unit provided in the second cutting area; and a carrying-out step of carrying the sectioned cut-piece cut into the small pieces out of the contamination controlled area with the sectioned cut-piece packed in a container.

### BRIEF DESCRIPTION OF THE DRAWINGS

Fig. 1 is a series of diagrams describing a jack-down technique used in a method of an embodiment of the invention for dismantling an SRU installed in a nuclear reactor building.

Fig. 2 is a perspective view illustrating the arrangement of various units used in the method of the embodiment for dismantling the SRU installed in the nuclear reactor building.

Fig. 3 is a plan view illustrating the arrangement of the various units in a contamination controlled area, the various units being used in the method of the embodiment for dismantling the SRU installed in the nuclear reactor building.

Fig. 4 is a diagram illustrating the configuration of a primary cutting unit used in the method of the embodiment for dismantling the SRU installed in the nuclear reactor building.

Fig. 5 is a diagram illustrating the configuration of a secondary cutting unit and a conveying unit used in the method of the embodiment for dismantling the SRU installed in the nuclear reactor building.

Fig. 6 is a flowchart showing the SRU dismantling procedure in the method of the embodiment for dismantling the SRU installed in the nuclear reactor building.

Fig. 7 is a diagram illustrating the structure of the SRU installed in the nuclear reactor building.

### BEST MODE FOR CARRYING OUT THE INVENTION

Hereinafter, with reference to the drawings, a detailed description is given of an embodiment of the present invention. The embodiment is a method for dismantling an SRU installed in a nuclear reactor building.

### (1) Jack-down technique

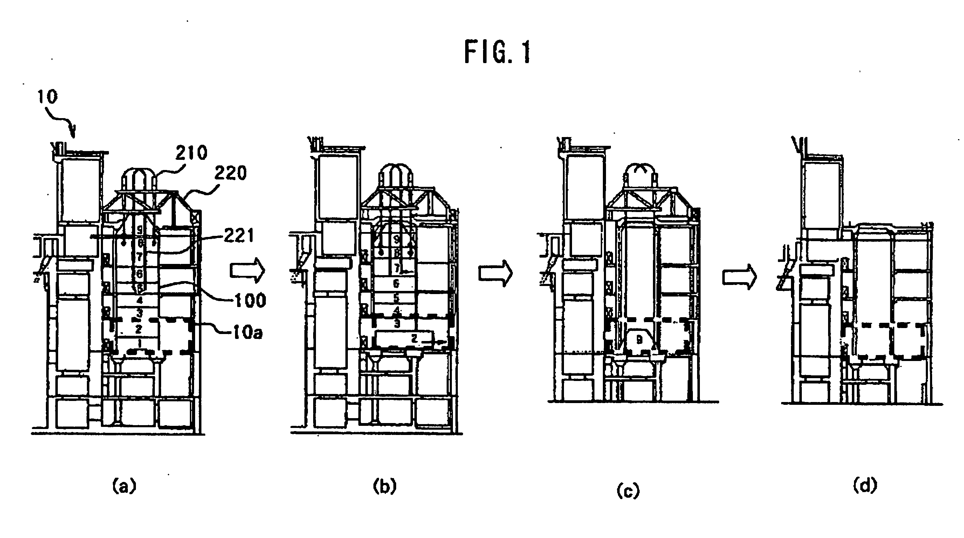

Fig. 1 is a diagram describing a jack-down technique used in the method of the present embodiment for dismantling the SRU installed in the nuclear reactor building.

In the jack-down technique used in the SRU dismantling method of the present embodiment, dismantling work is performed in a working area (the area surrounded by the dotted line in the figure, referred to as a contamination controlled area 10a) provided on the third floor of a nuclear reactor building 10 while the main body of an SRU 100 suspended by a jack down unit is lowered. The jack down unit includes: a truss 220 installed on the rooftop of a building, a part of the nuclear reactor building 10, in which the SRU 100 is installed; an oil-hydraulic jack 210 secured to the truss 220; and a strand cable 221 attached to the oil-hydraulic jack 210.

As the dismantling of a first part of the SRU 100 which is placed in the contamination controlled area 10a proceeds (Fig. 1(b)), a next part of the SRU 100 is introduced in the contamination controlled area 10a while the oil-hydraulic jack 210 is operated, and the next part is dismantled (Fig. 1(c)). Therefore, the dismantling work of the entire SRU 100 is performed only in the contamination controlled area 10a (Fig. 1(d)).

With the jack-down technique, the working area serving as the contamination controlled area 10a can be limited to an area on the third floor of the nuclear reactor building 10. In addition, dismantling work can be easily controlled remotely.

### (2) Remote controlled dismantling system

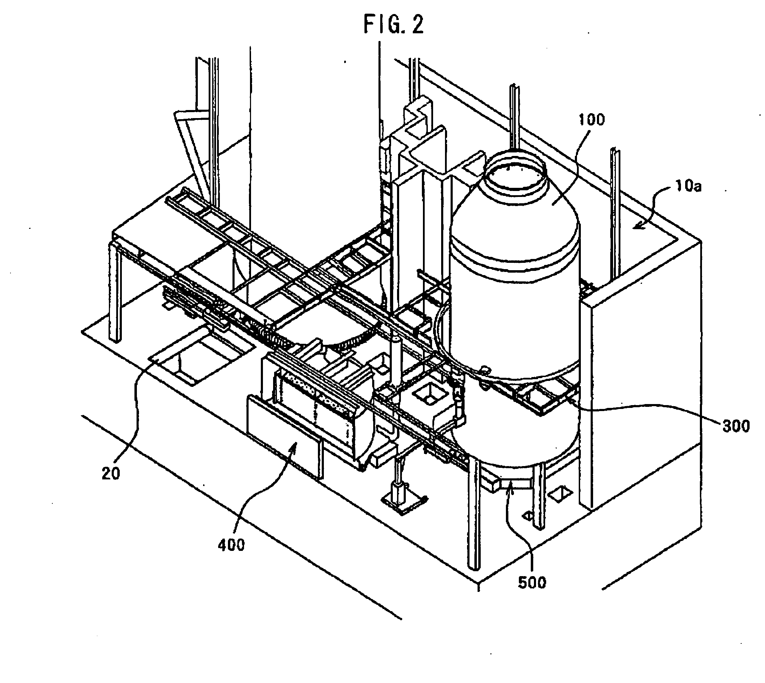

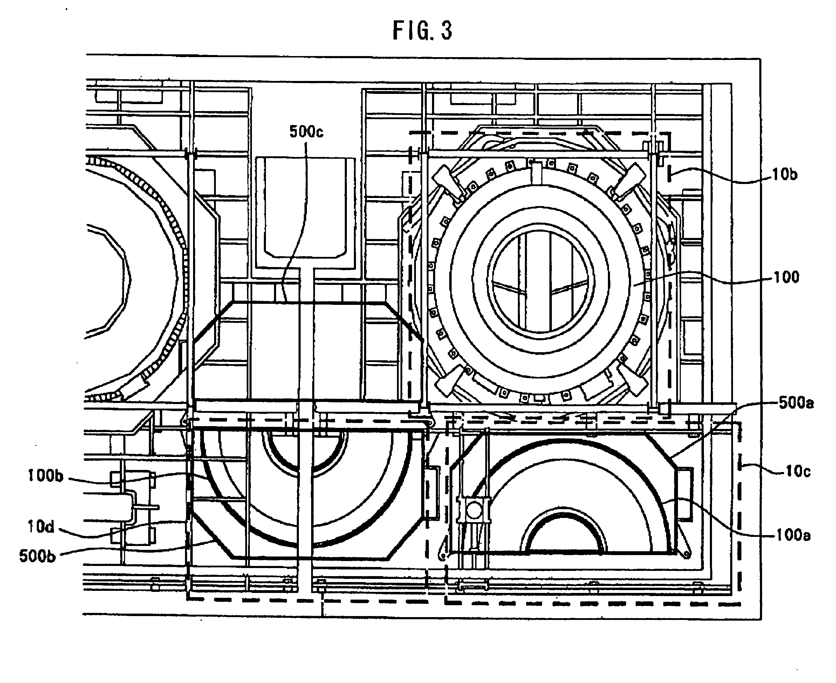

Fig. 2 is a perspective view illustrating the arrangement of various units in the contamination controlled area, each of the various units being used in the method of the present embodiment for dismantling the SRU installed in the nuclear reactor building. Fig. 3 is a plan view illustrating the arrangement of the various units in the contamination controlled area, each of the various units being used in the method of the present embodiment for dismantling the SRU installed in the nuclear reactor building.

A remote controlled dismantling system includes: a primary cutting unit 300 that cuts the main body of the SRU 100 to separate an annular cut-piece 100' from the main body of the SRU 100 and divides the annular cut-piece 100' into two pieces, or sectioned cut-pieces 100a and 100b; a secondary cutting unit 400 that cuts the two sectioned cut-pieces 100a and 100b into small pieces and packs the small pieces of the sectioned cut-pieces 100a and 100b into a container; and a conveying unit 500 for conveying the sectioned cut-pieces 100a and 100b between the primary cutting unit 300 and the secondary cutting unit 400.

The primary cutting unit 300 is disposed in a primary cutting area 10b in the contamination controlled area 10a provided substantially immediate below the SRU 100 suspended by the jack down unit. The secondary cutting unit 400 is disposed in secondary cutting areas 10c and 10d which are provided in unoccupied spaces in the contamination controlled area 10a.

As described above, all the primary cutting unit 300, the secondary cutting unit 400, and the conveying unit 500 are contained in the contamination controlled area 10a provided on the third floor of the nuclear reactor building 10. Accordingly, the contamination controlled area can be minimized.

In the present embodiment, the primary cutting unit 300 cuts the SRU 100 and divides the cut portion of the SRU 100 into the sectioned cut-pieces 100a and 100b, and the sectioned cut-pieces 100a and 100b are conveyed to the secondary cutting unit 400 using the conveying unit 500. The sectioned cut-pieces 100a and 100b have a semi-circular shape with a diameter of about 6 m, and therefore the conveying unit 500 constructed for conveying the sectioned cut-pieces 100a and 100b must have dimensions greater than the dimensions of the sectioned cut-pieces 100a and 100b (for example, 3,500 mm x 6,800 mm). In the present embodiment, in order to simultaneously perform the cutting and division by the primary cutting unit 300 and the shredding by the secondary cutting unit 400 to thereby shorten the process time, and in order to reduce the time for holding the SRU 100 in a suspended state as much as possible to thereby improve safety, three conveying units 500 (500a, 500b, and 500c) are contained in the contamination controlled area 10a.

By conveying the sectioned cut-pieces 100a and 100b using the three conveying units 500a, 500b, and 500c, the sectioned cut-pieces 100a and 100b can be cut into small pieces in the secondary cutting areas 10c and 10d each having a small area. In the present embodiment, the three conveying units 500 are used. However, the number of the conveying units is not limited to three. For example, the sectioned cut-pieces 100a and 100b may be conveyed using two conveying units 500.

The primary cutting unit 300 and the secondary cutting unit 400 can be operated simultaneously. Accordingly, the process can be shortened by operating the primary cutting unit 300 and the secondary cutting unit 400 in parallel.

An articulated manipulator arm can be used for the primary cutting unit 300 and the secondary cutting unit 400.

### (i) Primary cutting unit

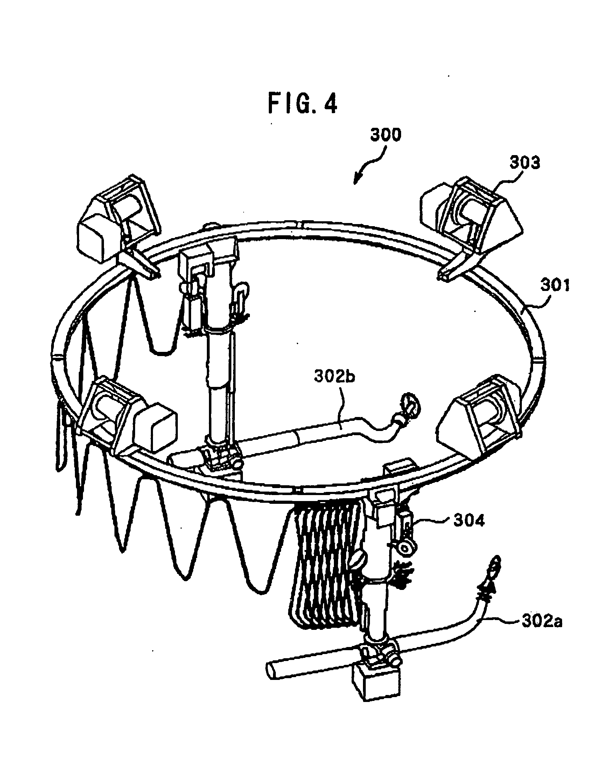

Fig. 4 is a diagram illustrating the configuration of the primary cutting unit used in the method of the present embodiment for dismantling the SRU installed in the nuclear reactor building.

The primary cutting unit 300 is a unit for the annular cutting process for cutting the SRU 100 into the annular cut-piece 100' for each tier and for the perpendicular cutting process for dividing the annular cut-piece 100' into the two sectioned cut-pieces 100a and 100b. The primary cutting unit 300 includes, as a cutting system: one annular monorail 301 (radius: about 4 m) attached so as to surround the entire circumference of the SRU 100; and two cutting arms 302a and 302b (each including a telescoping arm, a horizontal slide, and a manipulator arm) attached to the.annular monorail 301.

Each of the two cutting arms 302a and 302b has a tool at its end portion that can be replaced by remote control. The cutting operation can be performed in two places simultaneously by using a combination of the tools at the end portions of the two cutting arms 302a and 302b. Moreover, a combination of different operations can be performed by using the cutting arms 302a and 302b. For example,
a piece to be cut is cut by one of the cutting arms 302a and 302b while being supported by the other.

A clamping mechanism 304 is a mechanism provided for clamping the cut-pieces of the SRU 100 cut by the cutting arms 302a and 302b and for placing the cut-pieces in a container provided separately. Hoists 303 are provided for moving the monorail 301. The hoists 303 have two roles, i.e., a role in positional adjustment (since it is technologically difficult to place the SRU 100 suspended by the jack unit in a reference point, the monorail 301 is provided with the positional adjustment function) and a role in lowering the monorail 301 to the floor level of the third floor during maintenance.

Examples of the method for operating the primary cutting unit 300 include a method using a mini-master arm and a method in which the primary cutting unit 300 is automatically controlled according to a pre-loaded program.

Examples of the cutting method used in the primary cutting unit 300 include a thermal cutting method using acetylene gas or the like and a mechanical cutting method using a diamond cutter or the like.

### (ii) Secondary cutting unit

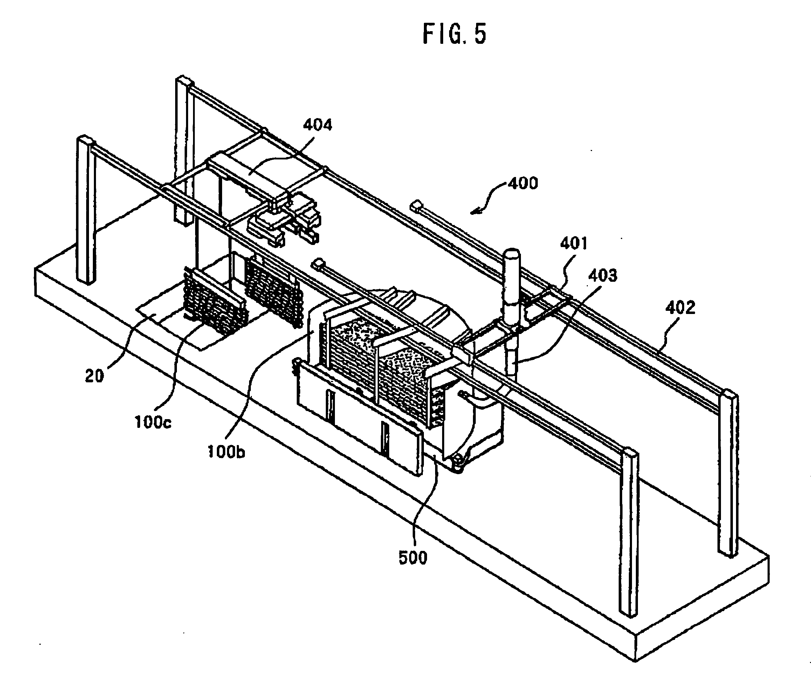

Fig. 5 is a diagram illustrating the configuration of the secondary cutting unit and the conveying unit used in the method of the present embodiment for dismantling the SRU installed in the nuclear reactor building.

The secondary cutting unit 400 is a unit for cutting the sectioned cut-pieces 100a and 100b, which are formed by annularly cutting the SRU 100 and dividing the cut-piece into two parts, into small pieces and for packing the sectioned cut-pieces 100a and 100b in a container. The secondary cutting unit 400 includes a gantry 401 movable on rails 402 in an X-Y direction, and a cutting arm 403 for handling the cut-pieces is disposed in the gantry 401.

A hoist 404 is provided for carrying out cut-pieces 100c cut by the cutting arm 403. Specifically, before being cut by the cutting arm 403, the sectioned cut-piece 100b is held and is then cut by the cutting arm 403. After completion of cutting, the cut-pieces 100c are conveyed to and placed in the conveying container (not shown).

The conveying unit 500 is a unit for conveying the sectioned cut-pieces 100a and 100b, and each of the sectioned cut-pieces 100a and 100b is placed on the conveying unit 500. The conveying unit 500 is remote controlled and can move between the primary cutting area 10a and the secondary cutting areas 10b and 10c on the floor of the nuclear reactor building. An air caster may be used as the conveying unit 500.

The two sectioned cut-pieces 100a and 100b annularly cut and divided by the primary cutting unit 300 are conveyed to the secondary cutting unit 400 by the conveying unit 500 and are then cut into the cut-pieces 100c, which are small pieces of the body or the panel of the heat exchanger tube, by the secondary cutting unit 400. Subsequently, the cut-pieces 100c are brought down through a carry-out port 20 using the hoist 404 and are packed in the conveying container (not shown) placed on the first floor of the nuclear reactor building.

### (3) Dismantling procedure using the remote control system

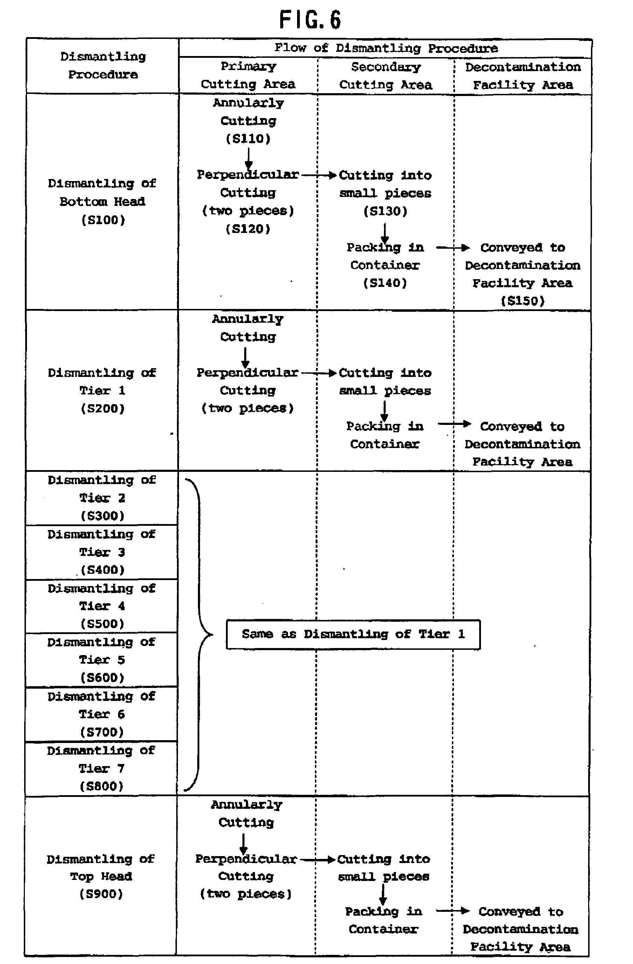

Fig. 6 is a flowchart showing the SRU dismantling procedure in the method of the present embodiment for dismantling the SRU installed in the nuclear reactor building.

The main flow of the process for dismantling the SRU 100 is as follows. In step 100 (each step in the figure is abbreviated as "S"), the bottom head 130 of the SRU 100 is annularly cut and divided into two pieces by the primary cutting unit 300, and the two cut-pieces of the bottom head 130 are conveyed to the secondary cutting areas 10c and 10d. Subsequently, the SRU 100 is moved down by a predetermined amount using the jack down unit 210 to introduce the tier 1 (121), which is a next portion to be cut, in the contamination controlled area 10a.

Next, dismantling of the tier 1 (121) (step 200) is started. After the tier 1 (121) is conveyed to the secondary cutting areas 10c and 10d, the tier 2 (122) is introduced in the contamination controlled area 10a, and dismantling of the tier 2 (step 300) is started.

Then, the dismantling and the introduction in the contamination controlled area 10a are repeated for each of the other portions (110 to 130) of the SRU 100, and the process for dismantling the entire SRU 100 is completed (steps 100 to 900).

Next, a detailed description is given of the method for dismantling each of the portions (110 to 130) of the SRU 100. Since the same dismantling method is used for each of the portions (110 to 130) of the SRU 100, only the method for dismantling the bottom head 130 is described.

First, in step 110, the primary cutting unit 300 annularly cuts the bottom head 130 introduced in the contamination controlled area 10a to separate the annularly cut-piece 130' from the SRU.

Next, in step 120, the annularly cut-piece 130', which is the annularly cut-bottom head 130, is further cut into two pieces by the primary cutting unit 300, whereby the bottom head 130 is divided into sectioned cut-pieces 130a and 130b. Subsequently, each of the sectioned cut-pieces 130a and 130b formed by annularly cutting the bottom head 130 and dividing the cut-piece into the two pieces is conveyed to the secondary cutting areas 10c and 10d by the conveying units 500.

In step 130, the sectioned cut-pieces 130a and 130b of the bottom head 130 are cut into small pieces by the secondary cutting unit 400 to form cut-pieces 130c.

In step 140, the cut-pieces 130c formed by cutting the bottom head 130 by the secondary cutting unit 400 are packed in the predetermined container installed on the first floor of the nuclear reactor building, the cut-pieces 130c being packed through the carry-out port 20 in the contamination controlled area 10a of the nuclear reactor building 10.

In step 150, the secondary cutting unit 400 carries the container packed with the cut-pieces 130c of the bottom head 130 out of the secondary cutting unit 400, and the packed container is conveyed to a decontamination facility area.

As described above, in the method of the present embodiment for dismantling the SRU installed in the nuclear reactor building, all the cutting work for the heat exchanger and the packing work for the container are performed in the contamination controlled area provided in a part of the nuclear reactor building. Accordingly, the contamination controlled area can be minimized.

## Claims

1. A method for dismantling a heat exchanger (100) installed in a nuclear reactor building (10), the method comprising:
an introducing step of introducing a part of the heat exchanger in a contamination controlled area (10a), the introducing step including providing the contamination controlled area in a part of the nuclear reactor building, suspending the heat exchanger in the nuclear reactor building by a jack down unit(210) provided in the nuclear reactor building, and lowering the heat exchanger;
a first cutting step of cutting the part of the suspended heat exchanger by a first cutting unit (300) provided in a first cutting area (10b) in the contamination controlled area to thereby separate a sectioned cut-piece (100) from the suspended heat exchanger;
a conveying step of conveying the sectioned cut-piece from the first cutting area to a second cutting area (10c, 10d) in the contamination controlled area by a conveying unit (500);
a second cutting step of cutting the conveyed sectioned cut-piece into small pieces by a second cutting unit (400) provided in the second cutting area; and
a carrying-out step of carrying the sectioned cut-piece cut into the small pieces out of the contamination controlled area with the sectioned cut-piece packed in a container.

2. The method for dismantling the heat exchanger (100) installed in the nuclear reactor building (10) according to claim 1, wherein, in the first cutting step, the sectioned cut-piece (100) is formed by annularly cutting the part of the heat exchanger and by dividing it into two pieces (100a, 100b).

## Patentansprüche

1. Verfahren zur Demontage eines Wärmetauschers (100), der in einem Kernreaktorgebäude (10) installiert ist, umfassend die folgenden Schritte:
einen Einführungsschritt eines Teils des Wärmetauschers in eine Zone (10a),
deren Kontaminierung überwacht wird, wobei zu dem Einführungsschritt das Schaffen einer bezüglich der Kontaminierung überwachten Zone in einem Teil des Kernreaktorgebäudes gehört;
des weiteren Aufhängen des Wärmetauschers in dem Kernreaktorgebäude mittels einer Windeneinheit (210), die in dem Kernreaktorgebäude vorgesehen ist, und das Absenken des Wärmetauschers;
des weiteren einen ersten Schritt, mit dem der Teil des aufgehängten Wärmetauschers durch eine erste Schneideinheit (300) begrenzt wird, die sich in einem ersten Schneidebereich (10b) in der auf Kontaminierung überwachten Zone befindet, um dadurch ein von dem aufgehängten Wärmetauscher abgeschnittenes Schnittstück (100) abzutrennen;
des weiteren einen Beförderungsschritt, mit dem das abgeschnittene Schnittstück (100) mit Hilfe einer Beförderungseinheit (500) von dem ersten Schneidbereich zu einem zweiten Schneidbereich (10c, 10d) in der auf Kontaminierung überwachten Zone befördert wird;
ferner einen zweiten Schneidschritt, mit dem das beförderte, abgeschnittene Schnittstück mit Hilfe einer zweiten Schneideinheit (400), die in dem zweiten Schneidbereich vorgesehen ist, zerschnitten wird; und schließlich einen Austragungsschritt, mit dem das abgeschnittene Schnittstück, das in kleine Stücke zerteilt, aus der auf Kontaminierung überwachten Zone transportiert wird, wobei das Schnittstück in einem Behälter gepackt worden ist.

2. Verfahren zur Demontage eines Wärmetauschers (100), der in einem Kernreaktorgebäude (10) installiert ist, nach Anspruch 1, **dadurch gekennzeichnet, daß** in dem ersten Schneidschritt das abgeschnittene Schnittstück (100) durch ringförmiges Schneiden des Teils des Wärmetauschers sowie dadurch geschaffen wird, daß es in zwei Stücke (100a, 100b) geteilt wird.

## Revendications

1. Procédé de démontage d'un échangeur thermique (100) installé dans un bâtiment de réacteur nucléaire (10), le procédé comprenant :
- une étape d'introduction consistant à introduire une partie de l'échangeur thermique dans une zone à contamination contrôlée (10a), l'étape d'introduction comprenant la fourniture de la zone à contamination contrôlée dans une partie du bâtiment de réacteur nucléaire, la suspension de l'échangeur thermique dans le bâtiment de réacteur nucléaire par une unité de descente automatique (210) disposée dans le bâtiment de réacteur nucléaire, et l'abaissement de l'échangeur thermique ;
- une première étape de découpe consistant à découper la partie de l'échangeur thermique suspendu par une première unité de découpe (300) disposée dans une première zone de découpe (10b) dans la zone à contamination contrôlée pour ainsi séparer une pièce de découpe sectionnée (100) de l'échangeur thermique suspendu ;
- une étape de transport consistant à transporter la pièce de découpe sectionnée de la première zone de découpe à une seconde zone de découpe (10c, 10c) dans la zone à contamination contrôlée par une unité de transport (500) ;
- une seconde étape de découpe consistant à découper la pièce de découpe sectionnée transportée en petites pièces par une seconde unité de découpe (400) disposée dans la seconde zone de découpe ; et
- une étape de transport de sortie consistant à transporter la pièce de découpe sectionnée découpée en petites pièces hors de la zone à contamination contrôlée, la pièce de découpe sectionnée étant emballée dans un contenant.

2. Procédé de démontage de l'échangeur thermique (100) installé dans le bâtiment de réacteur nucléaire (10) selon la revendication 1, dans lequel, dans la première étape de découpe, la pièce de découpe sectionnée (100) est formée par découpe annulaire de la partie de l'échangeur thermique et par division de celle-ci en deux pièces (100a, 100b).
